# EUROPÄISCHE PATENTSCHRIFT

(11) **EP 2 313 225 B1**
(45) Veröffentlichungstag und Bekanntmachung des Hinweises auf die Patenterteilung: **08.10.2014**
(21) Anmeldenummer: 09736367.5
(22) Anmeldetag: 19.08.2009
(51) Int. Cl.: B23C 5/28

(54) **SPANABHEBENDES WERKZEUG MIT MINIMALMENGEN-SCHMIERUNG (MMS)**
CUTTING TOOL WITH MINIMAL QUANTITY LUBRICATION (MQL)
OUTIL D'ENLÈVEMENT DE COPEAUX COMPRENANT UN SYSTÈME DE LUBRIFICATION EN QUANTITÉ MINIMALE

(30) Priorität: 21.08.2008 DE 102008039056; 10.02.2009 DE 102009008308
(43) Veröffentlichungstag der Anmeldung: 27.04.2011
(73) Patentinhaber: Gühring OHG, 72458 Albstadt (DE)
(72) Erfinder: HECKEL, Gerd, 90617 Puschendorf (DE)
(74) Vertreter: Meitinger, Thomas Heinz
(86) Internationale Anmeldenummer: PCT/DE2009/001166
(87) Internationale Veröffentlichungsnummer: WO 2010/020234

(56) Entgegenhaltungen:
- EP-A1- 0 463 422
- EP-A1- 0 611 624
- EP-A1- 1 285 713
- WO-A1-01/58632
- WO-A1-91/15321
- WO-A1-2007/085281
- DE-A1- 10 145 006
- JP-A- 2004 276 136
- US-A- 3 313 186
- US-A- 3 798 726
- DATABASE WPI Week 200659 Thomson Scientific, London, GB; AN 2006-573757 XP002562340 -& JP 2006 218549 A (TOSHIBA TUNGALOY KK) 24. August 2006 (2006-08-24)

## Beschreibung

Die Erfindung betrifft ein spanabhebendes Werkzeug nach dem Oberbegriff des Patentanspruchs 1. Ein solches Werkzeug ist aus der JP 2006-218549 bekannt.

### Stand der Technik:

Spanabhebende Werkzeuge, beispielsweise Fräswerkzeuge werden zur maschinellen, spanabhebenden Bearbeitung von metallischen und nichtmetallischen Werkstoffen eingesetzt. Die Fräswerkzeuge werden entsprechend des zu bearbeitenden Materials mit unterschiedlichen Drehzahlen und Vorschubgeschwindigkeiten betrieben. Durch die Spanverformung bei der Bearbeitung wird oftmals eine hohe Bearbeitungstemperatur, insbesondere bei Drehzahlen im Bereich von 10.000 Umdrehungen pro Minute und mehr erreicht, die durch entsprechende Schmier-/Kühlmittel verringert wird.

Für eine Senkung der Bearbeitungstemperatur hat sich beispielsweise die bekannte Minimalmengen-Schmierung (MMS) bewährt, deren Vorteile in einer optimierten Bearbeitungszeit und einer Kostenoptimierung hinsichtlich des eingesetzten Kühl /Schmiermittels begründet ist. Zusätzlich kann eine Optimierung des Prozesses zu einer erhöhten Standzeit des Werkzeuges führen.

In der Druckschrift DE 101 45 006 A1 ist ein Fräswerkzeug mit einer Kühlung gezeigt, wobei ein Kühl-/Schmiermittel über eine Kanalanordnung im Fräswerkzeug zu den Schneideinsätzen geleitet wird. Dabei wird das Kühl-/Schmiermittel über Kühlmittelauslassöffnungen den jeweils zugeordneten Schneideinsätzen zugeführt.

In der Druckschrift US 3,313,186 ist ein Bohrer gezeigt, der zwei Röhrchen zum Führen eines Kühl-/Schmiermittels aufweist, die anschließend an einen gemeinsamen Hohlraum beidseitig und parallel zu einer Drehachse des Bohrers verlaufen, und die Auslassöffnungen im Bereich von dessen Bohrkopf aufweisen.

Derartige Kühlmittelkanäle weisen im Allgemeinen einen Verlauf auf, welcher der Werkzeuggeometrie angepasst ist.

Eine Richtungsänderung von Kühlmittelkanälen ist oftmals scharfkantig und kann zu einer Entmischung eines als Aerosol ausgebildeten Kühl-/Schmiermittels-Gemischs führen. Somit kann eine ausreichende Kühlung bzw. Schmierung eines derartigen Fräswerkzeuges nicht mehr gewährleistet werden und führt zu einer unerwünschten, langen Spanausbildung und überdurchschnittlichen Erwärmung der Schneiden. Dabei verringern eine derartige Spanausbildung sowie die Erwärmung der Schneiden die zusätzlichen mechanischen Schneideigenschaften des Fräswerkzeuges.

Der Erfindung liegt deshalb die Aufgabe zu Grunde, ein spanabhebendes Werkzeug, beispielsweise ein Fräswerkzeug, für hohe Drehzahlen derart weiter zu bilden, dass die Standzeit des Werkzeuges optimiert wird.

Diese Aufgabe wird durch die Merkmale des unabhängigen Anspruchs 1 gelöst.

In den abhängigen Ansprüchen sind vorteilhafte und zweckmäßige Weiterbildungen der Erfindung angegeben.

Die Erfindung geht von einem spanabhebenden Werkzeug, beispielsweise einem Fräswerkzeug aus, insbesondere für Drehzahlen ≥ 10.000 Umdrehungen pro Minute, mit einem Grundkörper, in dem eine Kanalanordnung zur Zuführung von Kühl-/Schmiermittel zu jeder Schneide des Fräswerkzeugs ausgebildet ist.

Gemäß der Erfindung ist im Werkzeug ein zentrales Verteilerelement angeordnet, von welchem zu einer Kühlmittelaustrittsöffnung vor jeder Schneide ein separater, gesonderter Kühlmittelkanal für Kühl-/Schmiermittel verläuft und das jeder Kühlmittelkanal in dem zentralen Verteilerelement in einer Achsrichtung des Werkzeugs von einem zentralen Bereich ausgeht.

Ein separater, gesonderter Kühlmittelkanal führt das erforderliche Schmier-/Kühlmittel auf direktem Weg von dem zentralen Verteilerelement an jede Schneide des Fräswerkzeugs, wobei die Kühlmittelkanal-Führung flexibel ausgebildet werden kann.

Darüber hinaus verbessert die Anordnung von Kühlmittelkanälen, die in einer Achsrichtung des Werkzeugs von einem zentralen Bereich ausgehen die kontinuierliche und kantenfreie Durchleitung von Kühl-/ Schmiermittel bis hin zur Schneide, wodurch eine eventuelle Entmischung eines Aerosols verringert wird.

Gemäß einer bevorzugten Ausgestaltung der Erfindung ist das zentrale Verteilerelement (4) ein separates Element.

Die Anordnung eines zentralen Verteilerelementes in einem Werkzeug als separates Element verringert die Herstellkosten des Werkzeugs gegenüber einem Werkzeug mit einem einstückig angeordneten Verteilerelement, da insbesondere das Element besser zugänglich ist. Darüber hinaus bildet das Verteilerelement eine verbesserte Austauschbarkeit im Falle eines Defektes oder einer nachträglichen Anpassung der Kanalgeometrien an die Duchflusseigenschaften.

In einer bevorzugten Ausgestaltung der Erfindung ist vorgesehen, dass das zentrale Verteilerelement zu dessen Versorgung für die Anordnung an einem zentralen Kühlmittelzuführkanal ausgelegt ist. Die Kanalgeometrie im Verteilerelement ist dabei der Geometrie des zentralen Kühlmittelzuführkanals angepasst, wodurch ein Rückstau des Kühlmittels und eine daraus resultierende verminderte Kühlung der Schneiden des Werkzeugs vermieden werden.
In einer weiteren überdies bevorzugten Ausgestaltung der Erfindung ist vorgesehen, dass das zentrale Verteilerelement dem zentralen Kühlmittelzuführkanal nachgeordnet ist. Die Anordnung des Verteilerelementes im Anschluss an den Kühlmittelzuführkanal hat den Vorteil, das Verteilerelement mit seinen separaten Kühlmittelkanälen ortsnah an den Schneiden angeordnet werden kann. Eine eventuelle Entmischung des Kühlmittels kann durch Vermeidung wechselnder Kanalgeometrien verhindert werden. Dies ist beispielsweise der Fall, wenn Kühlmittel von einem großen Kanaldurchmesser des zentralen Kühlmittelkanals auf eine Verteilstelle trifft, von welchem Kanaldurchmesser abgehen und auf diesen ein vergrößerter Durchmessers im nachfolgenden Teilbereich des zentralen Kühlmittelkanals folgt.

In einer bevorzugten Ausgestaltung der Erfindung ist vorgesehen, dass der Kühlmittelzuführkanal im Grundkörper symmetrisch entlang einer Rotationsachse liegt.
Dies hat den Vorteil, dass der Kühlmittelzuführkanal rotationssymmetrisch ausbildbar ist und eine eventuelle Unwucht des Fräswerkzeugs dadurch vermieden wird.

Zusätzlich ist eine zentrale Anordnung eines Zuführkanals für Kühl-/Schmiermittel mit dem Zuleitungssystem in der Fräsmaschine vorteilhafter zu adaptieren.

In einer überdies bevorzugten Ausgestaltung der Erfindung ist vorgesehen, dass im zentralen Verteilerelement separate Verteilerkanäle ausgebildet sind.

Dies hat den Vorteil, dass das Kühl-/Schmiermittel in einer nahezu gleichmäßigen Verteilung jeder Schneide zugeführt werden kann, was eine gleichmäßige Kühlung/Schmierung jeder Schneide gewährleistet.

Gemäß der Erfindung ist vorgesehen, dass zwischen dem zentralen Verteilerelement und der Austrittsöffnung separate Kühlmittelkanäle zumindest abschnittsweise über ein Rohrstück ausgebildet sind.

Ein als Rohrstück ausgebildeter Kühlmittelkanal hat den Vorteil, dass der Verlauf des Kühlmittelkanals als ein "fließender", insbesondere kantenfreier Verlauf ausgebildet ist.

Dadurch können bei einer Richtungsänderung der Kanalführung, beispielsweise von dem vertikal verlaufenden Kühlmittelzuführkanal zu den am Außenumfang des Fräswerkzeuges angeordneten Schneiden, scharfkantige Kanalführungen, an denen beispielsweise eine Kühlmittelentmischung stattfinden könnte, vermieden werden.

In einer überdies bevorzugten Ausgestaltung der Erfindung ist vorgesehen, dass das Rohrstück gebogen geführt ist.
Dies hat den Vorteil, dass das Kühl-/Schmiermittel aufgrund nichtvorhandener Ecken und Kanten in der Kanalführung kontinuierlich und störungsfrei fließen kann.

In einer weiteren, bevorzugten Ausgestaltung der Erfindung ist vorgesehen, dass das Rohrstück freiverlaufend im Grundkörper angeordnet ist.

Die freiverlaufende Anordnung des Rohrstücks im Grundkörper hat den Vorteil, dass das Rohrstück zwischen dem Austritt des Verteilerelementes und den Schneiden in seiner Verlaufsrichtung flexibel anpassbar ist.

In einer weiteren, bevorzugten Ausgestaltung der Erfindung ist vorgesehen, dass das Rohrstück über eine Durchführung im Schneidenkranz des Fräswerkzeugs radial nach Außen geführt ist.

Dies hat den Vorteil, dass das Rohrstück im Bereich kurz vor der Schneide des Fräswerkzeugs zusätzlich fixiert ist, um eine eventuelle Unwucht des freiverlaufenden Rohrstücks zu vermeiden.

Weiterhin ist in einer überdies bevorzugten Ausgestaltung der Erfindung vorgesehen, dass das Rohrstück bis kurz vor oder über die Kühlmittelaustrittsöffnung am Schneidenkranz hinaus geführt ist.

Dies hat den Vorteil, dass das Kühl-/Schmiermittel je nach Anwendung bzw. Drehzahl des Fräswerkzeugs so nahe wie erforderlich an die Schneide geführt werden kann.

In einer bevorzugten, weiteren Ausgestaltung der Erfindung ist vorgesehen, dass das Rohrstück das Kühl-/Schmiermittel entgegen der Rotationsrichtung des Fräswerkzeugs auf eine im Schneidenkranz angeordnete Schneidplatte leitet.

Die Zufuhr des Kühl-/Schmiermittels kann dadurch gegenläufig zur Rotationsrichtung des Fräswerkzeugs von der Kühlmittelaustrittsöffnung auf die Schneide des Fräswerkzeuges gerichtet werden, wodurch eine ausreichende, kontinuierliche sowie präzise Kühlung/Schmierung jeder Schneide gewährleistet werden kann.

In einer weiteren, über dies bevorzugten Ausgestaltung der Erfindung ist vorgesehen, dass das Rohrelement aus einem Material mit einer geringen Masse gebildet ist.
Vorzugsweise ist das Rohrstück aus einem flexiblen Kunststoffmaterial ausgebildet, wodurch es im Vergleich zum Grundkörper des Fräswerkzeuges einen sehr geringen Beitrag zur Gesamtmasse aufweist.

Dies hat den Vorteil, dass aufgrund der geringen Masse des Kunststoffrohrstückes nahezu keine Unwuchten auftreten, wodurch ein störungsfrei rotierender Lauf des Fräswerkzeuges gewährleistet werden kann.

Es ist denkbar, dass das zentrale Verteilerelement auch werkstoffeinstückig oder unlösbar mit dem Werkzeug verbunden ist, sollte ein nachträglicher Austausch oder Anpassung an die Durchflusseigenschaften des Kühlmittels nicht erforderlich sein.

Weitere Merkmale der Erfindung gehen aus der nachfolgenden Figurenbeschreibung hervor.

Dabei zeigen:
- Figur 1:: Eine Schnittdarstellung mit einer Kanalanordnung von separat, gesondert verlaufenden Kühlmittelkanälen;
- Figur 2:: Eine Schnittdarstellung eines Fräswerkzeuges mit frei verlaufenden Rohrstücken;
- Figur 3:: Eine perspektivische Ansicht eines Schneidenkranzes mit einer Kühlmittelaustrittsöffnung.

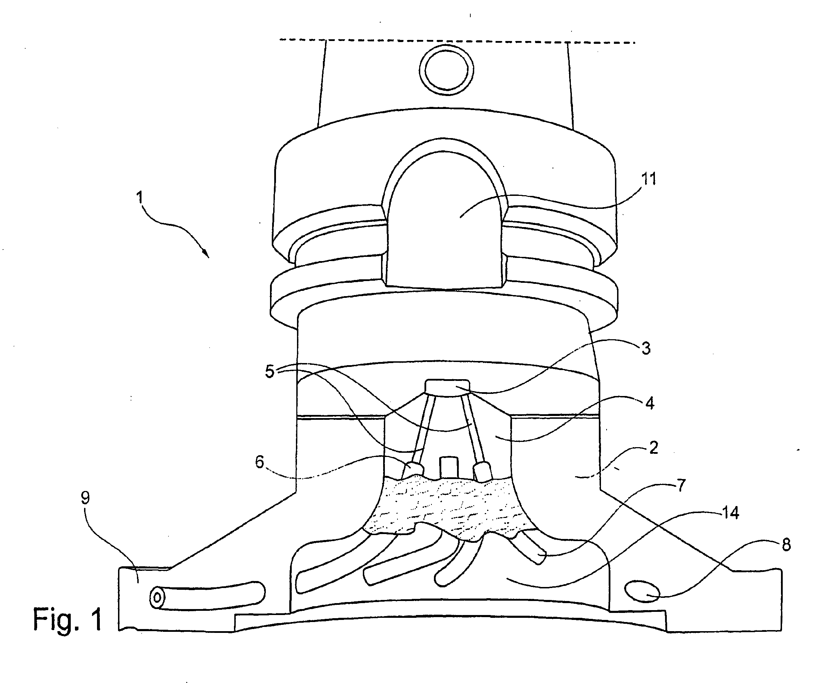

Figur 1 zeigt ein erfindungsgemäßes Fräswerkzeug 1, wobei der untere Bereich des einstückig angeformten Schneidenkranzes 9 im Schnitt dargestellt ist.

Durch den Werkzeugschaft 11 verläuft in der Rotationsachse des Fräswerkzeuges 1 ein zentraler Kühlmittelzuführkanal 3.

Über diesen zentralen Kühlmittelzuführkanal 3 wird das als Aerosol ausgebildete Kühl-/Schmiermittel dem Fräswerkzeug 1 zugeführt.

Dem zentralen Kühlmittelzuführkanal 3 ist nachfolgend ein zentrales Verteilerelement 4 angeordnet, welches beispielsweise als separat einsetzbares Verteilerelement 4 ausgebildet ist.

Das zentrale Verteilerelement 4 ist als rotationssymmetrisches Element ausgebildet und weist schräg zur Rotationsachse des Fräswerkzeugs 1 verlaufende Verteilerkanäle 5 auf. Die schräge Anordnung der Verteilerkanäle 5 bildet einen nahezu fließenden Verlauf der Kanalanordnung aus und vermeidet Ecken und Kanten in den Kanälen. Die Anzahl der Verteilerkanäle 5 ist der Schneidenanzahl des Fräswerkzeuges 1 angepasst.

Dabei ist der radiale Abstand zwischen den Verteilerkanälen 5 auf der Eintrittsseite des zentralen Verteilerelementes 4 vorzugsweise kleiner als der radiale Abstand zwischen den Verteilerkanälen 5 auf der Austrittsseite des zentralen Verteilerelementes 4. Die rotationsbedingte Einwirkung der Fliehkraft auf das Kühlmittel begünstigt somit zusätzlich zur Kühlmittelzufuhrdruck den Transport des Kühl-/Schmiermittels.

Zusätzlich sind die in Fließrichtung des Kühl-/Schmiermittels, schräg verlaufenden Verteilerkanäle 5 auf Ihren Austrittsseiten jeweils mit einem Kanalanschluss 6 ausgebildet, welcher beispielsweise zur kraftschlüssigen Verbindung mit einem weiterführenden Rohrstück 7 angepasst ist. Darüber hinaus sind auch alle anderen Verbindungstechniken, wie zum Beispiel das Kleben oder ein formschlüssiges Verbinden zur Verbindung eines Rohrstücks 7 mit einem Kanalanschluss 6 möglich.

Das in dem Kanalanschluss 6 angeordnete Rohrstück 7 ist in einem als Hohlraum ausgebildeten Innenraum 14 des Fräswerkzeugs 1 frei verlaufend. Hierdurch kann eine direkte, jedoch flexible Ausrichtung eines Rohrstücks 7 zwischen dem Kanalanschluss 6 und einer nachfolgenden Durchführung 8 gebildet werden, wodurch scharfkantige Richtungsänderungen im Verlauf der Kanalanordnung vermieden werden können.

Im weiteren Verlauf des Rohrstücks 7 wird dieses durch die horizontal angeordnete Durchführung 8 geführt, welche vorzugsweise einen gebogenen Richtungsverlauf aufweist und das Rohrstück 7 radial nach Außen zu den Schneiden des Fräswerkzeuges 1 führt. Der Verlauf der Durchführung 8 ist dem Richtungsverlauf des Rohstücks 7 angepasst, beispielsweise entgegen der Drehrichtung des Fräswerkzeugs 1.

Zur Vermeidung von eventuellen Unwuchten kann das angeordnete Rohrstück 7 zwischen dem Kanalanschluss 6 des zentralen Verteilerelements 4 und der Durchführung 8 fixiert werden. Eine derartige Fixierung ist durch ein flexibles, aushärtbares Material, beispielsweise ein Silikonmaterial durchführbar.

Selbstverständlich ist das zentrale Verteilerelement 4 ebenfalls als einstückig mit dem Fräswerkzeug 1 ausgebildetes Element realisierbar, wobei die Kanalanordnung in dem Fräswerkzeug 1 in gleicher Art und Weise ausgeführt werden kann.

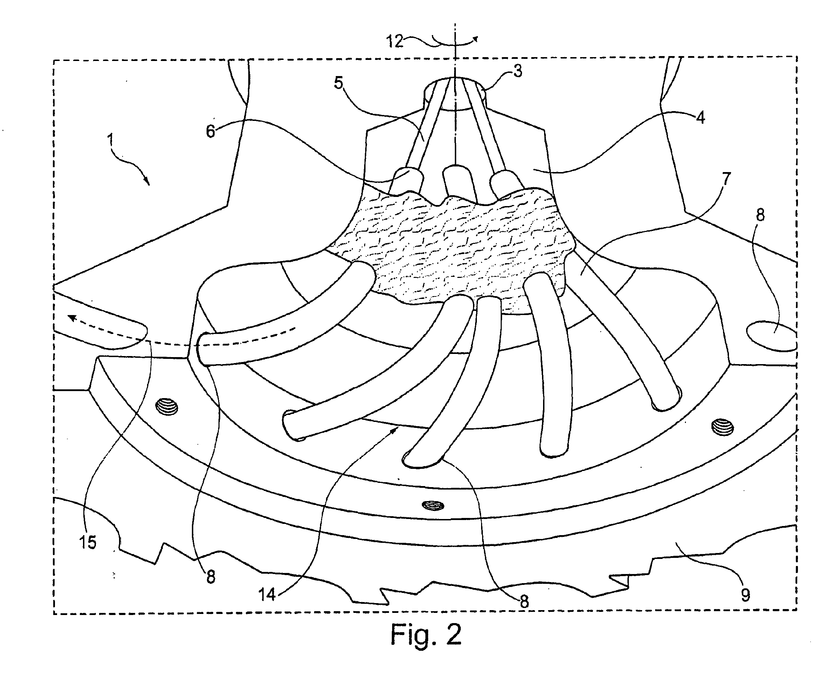

In Figur 2 ist das Fräswerkzeug 1 gezeigt, wobei die Blickrichtung auf den Innenraum 14 des Fräswerkzeuges 1 mit den darin angeordneten, frei verlaufenden Rohrstücken 7 gerichtet ist.
In dieser Figur wird der Verlauf 15 der Durchführung 8 im Schneidenkranz 9 ersichtlich, wobei die Durchführung 8 radial nach außen entgegen der Rotationsrichtung 12 des Fräswerkzeuges 1 ausgebildet ist.

Dies gewährleistet eine gerichtete Zufuhr des Kühl-/Schmiermittels auf die radial außen liegenden Schneiden des Fräswerkzeuges 1.

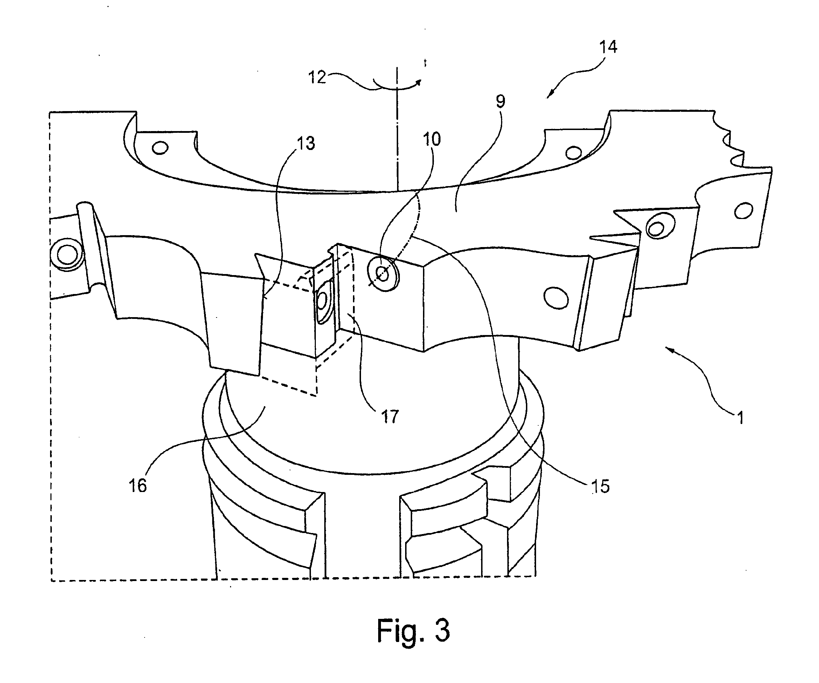

In Figur 3 ist eine perspektivische Darstellung eines radial außen angeordneten Schneidenkranzes 9 eines Fräswerkzeuges 1 gezeigt, wobei eine schematisch dargestellte Schneidplatte 16 mit ihrer Rückseite an einer ausgeformten Anschlagfläche (13) angeordnet werden kann.
Diese wird mit einer entsprechenden Klemmplatte 17 (schematisch dargestellt) mittels eines entsprechenden Befestigungsmittels (nicht dargestellt) im Schneidenkranz 9 des Fräswerkzeuges 1 befestigt.

In gegenüberliegender Anordnung zur Schneidplatte weist der Schneidenkranz 9 eine Kühlmittelaustrittsöffnung 10 auf, welche einen Verlauf 15 entgegen der Rotationsrichtung 12 des Fräswerkzeuges 1 auf die Schneidplatte 16 aufweist.

Die Ausrichtung der Kühlmittelaustrittsöffnung 10 gewährleistet somit eine gezielte Kühlung/Schmierung jeder einzelnen Schneide der Schneidplatten 16 mit Kühl-/Schmiermittel.

Die Leitungsführung der Kanalanordnung im Fräswerkzeug 1 bildet insgesamt einen homogenen und rückstaufreien, sowie kantenreduzierten Durchfluss für das verwendete Kühl-/Schmiermittel für ein Fräswerkzeug 1 mit hohen Drehzahlen aus.

Eine derartige Kanalführung gewährleistet eine ausreichende Kühlung/Schmierung eines Fräswerkzeugs 1 für hohe Drehzahlen mittels einer Minimalmengen-Schmierung (MMS).

### Bezugszeichenliste:

- 1: Fräswerkzeug
- 2: Grundkörper
- 3: zentraler Kühlmittelzuführkanal
- 4: zentrales Verteilerelement
- 5: Verteilerkanal
- 6: Kanalanschluss
- 7: Rohrstück
- 8: Durchführung
- 9: Schneidenkranz
- 10: Kühlmittelaustrittsöffnung
- 11: Werkzeugschaft
- 12: Rotationsrichtung Fräswerkzeug
- 13: Anschlagfläche
- 14: Innenraum
- 15: Verlauf (Durchführung)
- 16: Schneidplatte
- 17: Klemmplatte

## Patentansprüche

1. Spanabhebendes Werkzeug, beispielsweise Fräswerkzeug, insbesondere für Drehzahlen ≥ 10.000 Umdrehungen pro Minute, mit einem Grundkörper (2), in welchem eine Kanalanordnung zur Zuführung von Kühl-/Schmiermittel zu jeder Schneide des Werkzeugs ausgebildet ist, wobei im Werkzeug ein zentrales Verteilerelement (4) angeordnet ist, von welchem zu einer Kühlmittelaustrittsöffnung (10) vor jeder Schneide ein separater, gesonderter Kühlmittelkanal für Kühl-/Schmiermittel verläuft und wobei jeder Kühlmittelkanal in dem zentralen Verteilerelement (4) in Achsrichtung des Werkzeugs von einem zentralen Bereich ausgeht, **dadurch gekennzeichnet, dass** zwischen dem zentralen Verteilerelement (4) und der Kühlmittelaustrittsöffnung (10) die separaten Kühlmittelkanäle zumindest abschnittsweise über ein Rohrstück (7) in einem gemeinsamen Hohlraum (14) ausgebildet sind.

2. Spanabhebendes Werkzeug nach Anspruch 1, **dadurch gekennzeichnet, dass** das zentrale Verteilerelement (4) ein separates Element ist.

3. Spanabhebende Werkzeug nach einem der vorhergehenden Ansprüche, **dadurch gekennzeichnet, dass** das zentrale Verteilerelement (4) zu dessen Versorgung für die Anordnung an einem zentralen Kühlmittelzuführkanal (3) ausgelegt ist, wobei das zentrale Verteilerelement (4) dem zentralen Kühlmittelzuführkanal (3) nachgeordnet ist.

4. Spanabhebendes Werkzeug nach Anspruch 1, **dadurch gekennzeichnet, dass** der Kühlmittelzuführkanal (3) im Grundkörper (2) symmetrisch entlang einer Rotationsachse liegt.

5. Spanabhebendes Werkzeug nach einem der vorhergehenden Ansprüche, **dadurch gekennzeichnet, dass** das Rohrstück (7) gebogen geführt ist.

6. Spanabhebendes Werkzeug nach einem der vorhergehenden Ansprüche, **dadurch gekennzeichnet, dass** das Rohrstück (7) zumindest teilweise frei verlaufend im Grundkörper (2) angeordnet ist.

7. Spanabhebendes Werkzeug nach einem der vorhergehenden Ansprüche, **dadurch gekennzeichnet, dass** das Rohrstück (7) über eine Durchführung (8) im Schneidenkranz (9) des Fräswerkzeugs (1) radial nach außen geführt ist.

8. Spanabhebendes Werkzeug nach einem der vorhergehenden Ansprüche, **dadurch gekennzeichnet, dass** das Rohrstück (7) bis kurz vor oder über die Kühlmittelaustrittsöffnung (10) am Schneidenkranz (9) hinaus geführt ist.

9. Spanabhebendes Werkzeug nach einem der vorhergehenden Ansprüche, **dadurch gekennzeichnet, dass** das Rohrstück (7) das Kühl-/Schmiermittel entgegen der Rotationsrichtung (12) des Fräswerkzeugs (1) auf eine im Schneidenkranz (9) angeordnete Schneidplatte leitet.

10. Spanabhebendes Werkzeug nach einem der vorhergehenden Ansprüche, **dadurch gekennzeichnet, dass** das Rohrelement (7) aus einem Material mit einer gegenüber dem Grundkörper (2) geringen Masse gebildet ist.

## Claims

1. Cutting tool, for example, milling tool (1), in particular, for rotational speeds of ≥ 10,000 rpm, with a base body (2), in which a channel arrangement is provided for introduction of coolant/lubricant to each blade of the tool, wherein a central distribution element (4) is arranged within the tool, from which a separate, individual coolant channel for the coolant/lubricant runs to a coolant outlet opening (10) in front of each blade, and wherein each coolant channel within the central distribution element (4) emanates from a central area in an axial direction of the tool,
**characterized in that**
between the central distribution element (4) and the coolant outlet opening (10) the separate coolant channels are at least partially formed through a pipe section (7) within a common hollow space (14).

2. Cutting tool according to claim 1, **characterized in that** the central distribution element (4) is a separate element.

3. Cutting tool as claimed in any of the preceding claims, **characterized in that** the central distribution element (4) for its own supply is adapted to be positioned next to a central coolant supply channel (3), wherein the central distribution element (4) is positioned downstream of the central coolant supply channel (3).

4. Cutting tool according to claim 1, **characterized in that** the coolant supply channel (3) is positioned within the base body (2) symmetrical along an axis of rotation.

5. Cutting tool as claimed in any of the preceding claims, **characterized in that** the pipe section (7) is adapted to be curved.

6. Cutting tool as claimed in any of the preceding claims, **characterized in that** the pipe section (7) is adapted to extend at least partially freely within the base body.

7. Cutting tool as claimed in any of the preceding claims, **characterized in that** the pipe section (7) is guided radially outwards through an bushing (8) of a cutting ring (9) of the milling tool (1).

8. Cutting tool as claimed in any of the preceding claims, **characterized in that** the pipe section (7) extends until shortly before or beyond the coolant outlet opening (10) of the cutting ring (9).

9. Cutting tool as claimed in any of the preceding claims, **characterized in that** the pipe section (7) guides the coolant/lubricant against the rotational direction (12) of the milling tool (1) towards a blade arranged within the cutting ring (9).

10. Cutting tool as claimed in any of the preceding claims, **characterized in that** the pipe section (7) is formed of a material that has a low mass compared to the base body (2).

## Revendications

1. Outil d'usinage par enlèvement de copeaux, tel qu'outil de fraisage, en particulier pour des vitesses de rotation ≥ 10.000 tours par minute, avec un corps de base (2) où est formé un agencement de canaux pour l'amenée d'agent réfrigérant/lubrifiant vers chaque tranchant de l'outil de fraisage, un élément de répartition central (4) étant présent sur l'outil, à partir duquel un canal d'agent réfrigérant individuel séparé pour agent réfrigérant/lubrifiant s'étend vers une ouverture de sortie d'agent réfrigérant (10) devant chaque tranchant, et chaque canal d'agent réfrigérant partant d'une zone centrale de l'élément de répartition central (4) dans la direction axiale de l'outil, **caractérisé en ce que** les canaux d'agent réfrigérant séparés sont formés au moins en partie par une pièce tubulaire (7) dans une cavité commune (14) entre l'élément de répartition central (4) et l'ouverture de sortie d'agent réfrigérant (10).

2. Outil d'usinage par enlèvement de copeaux selon la revendication 1, **caractérisé en ce que** l'élément de répartition central (4) est un élément séparé.

3. Outil d'usinage par enlèvement de copeaux selon l'une des revendications précédentes, **caractérisé en ce qu'**en vue de son alimentation, l'élément de répartition central (4) est prévu pour être disposé sur un canal d'amenée d'agent réfrigérant central (3), ledit élément de répartition central (4) étant disposé en aval du canal d'amenée d'agent réfrigérant central (3).

4. Outil d'usinage par enlèvement de copeaux selon la revendication 1, **caractérisé en ce que** le canal d'amenée d'agent réfrigérant (3) est agencé symétriquement le long d'un axe de rotation dans le corps de base (2).

5. Outil d'usinage par enlèvement de copeaux selon l'une des revendications précédentes, **caractérisé en ce que** la pièce tubulaire (7) est coudée.

6. Outil d'usinage par enlèvement de copeaux selon l'une des revendications précédentes, **caractérisé en ce que** la pièce tubulaire (7) est disposée de manière à s'étendre librement au moins en partie dans le corps de base (2).

7. Outil d'usinage par enlèvement de copeaux selon l'une des revendications précédentes, **caractérisé en ce que** la pièce tubulaire (7) est guidée radialement vers l'extérieur par une traversée (8) dans la couronne de coupe (9) de l'outil de fraisage (1).

8. Outil d'usinage par enlèvement de copeaux selon l'une des revendications précédentes, **caractérisé en ce que** la pièce tubulaire (7) est guidée vers l'extérieur jusqu'à une faible distance avant, ou au-dessus de l'ouverture de sortie d'agent réfrigérant (10) sur la couronne de coupe (9).

9. Outil d'usinage par enlèvement de copeaux selon l'une des revendications précédentes, **caractérisé en ce que** la pièce tubulaire (7) dirige l'agent réfrigérant/lubrifiant contre le sens de rotation (12) de l'outil de fraisage (1) vers une plaquette de coupe disposée dans la couronne de coupe (9).

10. Outil d'usinage par enlèvement de copeaux selon l'une des revendications précédentes, **caractérisé en ce que** l'élément tubulaire (7) est constitué d'un matériau ayant une masse moindre que le corps de base (2).
